# DEMANDE DE BREVET EUROPEEN

(11) **EP 2 202 432 A1**
(43) Date de publication de la demande: **30.06.2010**
(21) Numéro de dépôt: 09015709.0
(22) Date de dépôt: 18.12.2009
(51) Int. Cl.: F16J 15/08, F16J 15/06, F16J 15/12

(54) **Joint d'etanchéité**

(30) Priorité: 22.12.2008 FR 0858918
(71) Demandeur: Carl Freudenberg KG, 69469 Weinheim (DE)
(72) Inventeur: Olivier, Jeanne, 87200 Saint-Junien (FR)

(57) **Abrégé**

L'objet de l'invention est un joint (10) de bloc moteur, notamment pour le montage d'un composant faiblement rigide sur ledit bloc moteur, susceptible d'être incorporé entre une première surface S1 et une deuxième surface S2 à étancher, ledit joint comprenant une âme (12) de hauteur h, d'épaisseur e, inclinée d'un angle a par rapport à son plan médian M, avec au moins une première zone de contact avec la première surface 51 et au moins une deuxième zone de contact avec la deuxième surface 52, **caractérisé en ce que** la hauteur h de l'âme (12) est constante et en ce que l'angle a d'inclinaison de l'âme (12) varie.

## Description

La présente invention est relative à un joint d'étanchéité, notamment pour un moteur à combustion interne.

L'étanchéité entre le bloc moteur et certains de ses composants, comme par exemple des carters métalliques ou des couvercles en matière plastique, peut être difficile à conserver au fur et à mesure de l'utilisation du moteur.

En effet, n'ayant qu'une fonction de protection ou ne nécessitant pas une conception rigide, ces composants sont généralement de faible épaisseur et donc susceptibles de subir des déformations relativement importantes et répétées au niveau de leur liaison avec le bloc moteur, ces déformations pouvant être amplifiées par les montées en température et les vibrations induites par le fonctionnement du moteur à combustion.

Afin de compenser ces déformations, le joint assurant l'étanchéité entre lesdits composants faiblement rigides et le bloc moteur doit posséder une bonne reprise élastique et une résistance à la compression adaptée à la faible rigidité desdits composants.

Ces deux caractéristiques doivent être ajustées au mieux afin que le joint réalise une étanchéité optimale et durable entre le composant et le bloc moteur. Selon un premier mode de réalisation de l'art antérieur, un joint d'étanchéité utilisé pour le montage d'un composant faiblement rigide peut se présenter sous la forme d'une plaque métallique intercalée entre deux surfaces à étancher comprenant au moins une nervure élastique entourant une ouverture de manière à former une barrière d'étanchéité autour de ladite ouverture.

De manière connue, une nervure comprend une section avec une première portion en contact avec une première surface à étancher, une première portion inclinée entre les deux surfaces reliée à une seconde portion inclinée par une portion courbe en contact avec la seconde surface à étancher et une seconde portion en contact avec la première surface à étancher. Les deux portions courbes s'étendent chacune sur toute la longueur de la nervure formant une barrière d'étanchéité.

La résistance à la compression d'une nervure réalisée dans une plaque métallique dépend principalement des dimensions et de la forme de la nervure ainsi que de l'épaisseur de matière et du matériau dans lequel est réalisée ladite plaque.

La résistance à la compression dudit joint peut donc être ajustée assez facilement, par exemple en faisant varier la hauteur de la nervure.

Bien que dépendant sensiblement des mêmes paramètres, il est plus difficile de s'assurer de la reprise élastique d'une nervure d'étanchéité après de nombreuses déformations.

Aussi, selon un deuxième mode de réalisation, un joint d'étanchéité, notamment utilisé avec des composants faiblement rigides, comporte au moins une plaque métallique comprenant plusieurs nervures élastiques ou plusieurs plaques métalliques comprenant au moins une nervure élastique.

Ainsi, en multipliant le nombre de barrières d'étanchéité, on divise la pression de contact appliquée par les surfaces à étancher sur chaque nervure, et on diminue l'amplitude des déformations subies par chaque nervure, ce qui permet de compenser les pertes de reprise élastique desdites nervures.

Toutefois, selon ce deuxième mode de réalisation, en multipliant le nombre de nervures, on augmente aussi la résistance à la compression du joint, ce qui peut être défavorable à l'efficacité de l'étanchéité du joint dans le cas du montage d'un composant faiblement rigide.

De plus, il est utile de préciser que les joints d'étanchéité entre le bloc moteur et ces composants faiblement rigides suivent un contour complexe composé de portions droites et de différentes portions courbes correspondant au contour des surfaces à étancher de la liaison entre lesdits composants et le bloc moteur.

Il est connu qu'une nervure droite et une nervure courbe de dimensions identiques et réalisées dans une même épaisseur d'un même matériau n'ont pas le même comportement mécanique, notamment en compression, les portions courbes étant susceptibles de mieux résister à la compression que les portions droites.

Ces différences de comportement mécanique d'une nervure entre les différentes portions du joint sont elles aussi défavorables à l'étanchéité car elles entraînent une répartition non homogène de la pression de contact de ladite nervure sur les surfaces à étancher et donc des variations d'efficacité de la barrière d'étanchéité sur le contour du joint.

De plus, les pressions atteintes par les fluides à étancher sont de plus en plus importantes, et si certaines portions du joint montrent une résistance à la compression trop faible, la pression de contact appliquée par ladite nervure sur les surfaces à étancher n'est plus suffisante dans certaines zones et des fuites vont obligatoirement apparaître.

Aussi, afin d'optimiser l'efficacité des barrières d'étanchéité d'un joint utilisé pour le montage d'un composant faiblement rigide, il est nécessaire de répartir la pression de contact de façon homogène sur toute la circonférence du joint afin d'assurer une étanchéité fiable.

Aussi, la présente invention vise à pallier les inconvénients de l'art antérieur en proposant un joint d'étanchéité, notamment pour le montage de composants faiblement rigides sur un bloc moteur, apte à être réalisé à partir d'une seule épaisseur de matière, ayant une bonne capacité de reprise élastique, et susceptible de permettre un ajustement de la résistance à la compression d'une barrière d'étanchéité en fonction des différentes portions droites et courbes du joint de manière à obtenir une pression de contact homogène, soit une étanchéité efficace et régulière, sur toute la circonférence du joint.

A cet effet, l'invention a pour objet un joint de bloc moteur, notamment pour le montage d'un composant faiblement rigide sur ledit bloc moteur, susceptible d'être incorporé entre une première surface et une deuxième surface à étancher, ledit joint comprenant une âme de hauteur h, d'épaisseur e, inclinée d'un angle a par rapport à son plan médian, avec au moins une première zone de contact avec la première surface et au moins une deuxième zone de contact avec la deuxième surface, **caractérisé en ce que** la hauteur h de i'âme est constante et en ce que l'angle a d'inclinaison de l'âme varie.

D'autres caractéristiques et avantages ressortiront de la description qui va suivre de l'invention, description donnée à titre d'exemple uniquement, en regard des dessins annexés sur lesquels :
- la figure 1 représente une vue de dessus d'une portion d'un premier mode de réalisation d'un joint d'étanchéité selon l'invention,
- la figure 2 représente une vue en perspective d'une portion d'un deuxième mode de réalisation d'un joint d'étanchéité selon l'invention,
- la figure 3 représente une section transversale de l'âme d'un premier mode de réalisation d'un joint d'étanchéité selon l'invention,
- la figure 4 représente une section transversale d'une portion d'un deuxième mode de réalisation d'un joint d'étanchéité selon l'invention,
- la figure 5 représente une portion d'un troisième mode de réalisation d'un joint d'étanchéité selon l'invention,
- la figure 6 représente une comparaison d'écrasement sous charge entre le profil d'une âme d'un joint selon l'invention et selon une autre conception.

Comme précisé dans le préambule, le joint 10 selon l'invention est adapté pour réaliser l'étanchéité du montage d'un composant de faible rigidité susceptible de subir des déformations répétées et relativement importantes.

Dans une application particulière, le joint 10 selon l'invention est destiné à réaliser une étanchéité optimale au niveau de la liaison entre un composant faiblement rigide et un bloc moteur, notamment une pièce de protection ou un collecteur d'admission monté sur le bloc moteur d'un véhicule, ledit composant étant susceptible de subir des montées en température et des déformations relativement importantes au niveau de ladite liaison.

Afin d'assurer une étanchéité optimale dans les conditions décrites ci-dessus, le joint 10 selon l'invention possède une bonne capacité de reprise élastique et une résistance à la compression adaptable sur sa longueur afin d'homogénéiser la pression de contact qu'il applique entre le composant faiblement rigide et le bloc moteur.

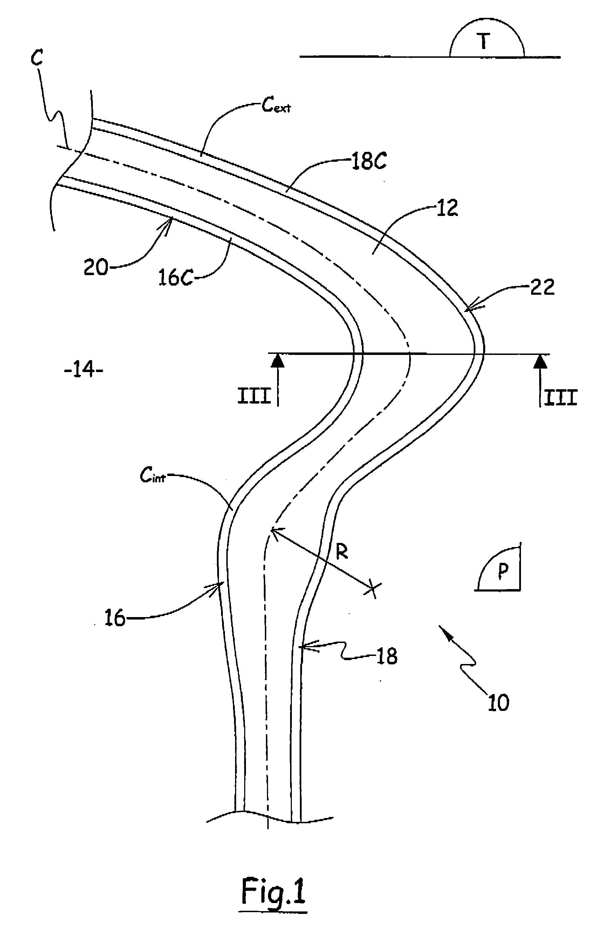

Ce joint 10, dont une portion est illustrée en figure 1, est susceptible d'être incorporé entre une première surface S1 et une deuxième surface S2 à étancher, ladite première surface 51 pouvant appartenir au bloc moteur et ladite deuxième surface 52 pouvant appartenir audit composant à monter.

De préférence, les deux surfaces S1 et S2 sont sensiblement planes et sensiblement parallèles.

Le joint 10 comprend une âme 12 inclinée par rapport auxdites surfaces S1 et S2 ainsi qu'au moins une première zone de contact avec la surface 51 et au moins une deuxième zone de contact avec la surface 52.

Ledit joint d'étanchéité 10 comprend une âme 12 de contour moyen C fermé entourant une ouverture 14 destinée à faire communiquer une partie creuse débouchant au niveau de la surface S1 avec une partie creuse débouchant au niveau de la surface 52.

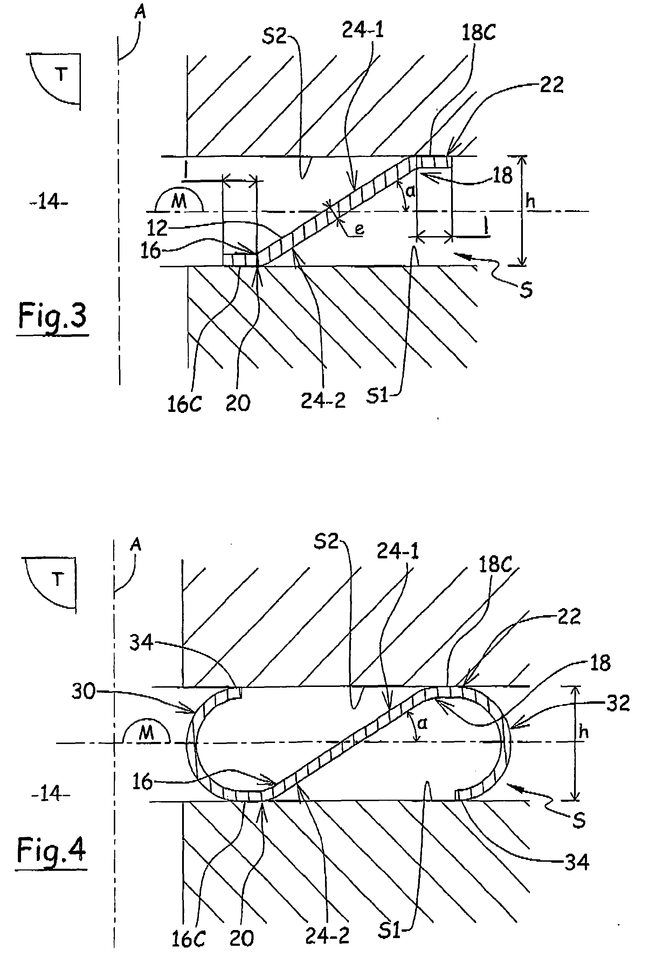

Comme l'illustre la section S du joint 10 selon un plan transversal T représentée en figure 3, ladite âme 12 est d'épaisseur e, de hauteur h, et inclinée d'un angle a par rapport à son plan médian M, le plan M correspondant au plan de symétrie du profil transversal de l'âme 12.

De préférence, l'épaisseur e et la hauteur h de l'âme 12 sont constantes sur tout le contour C de ladite âme 12.

L'extrémité intérieure 16 de la section S de l'âme 12 dans un plan transversal T vient au contact de l'une des surfaces (51,52) et définit le contour intérieur Cint dudit joint, et l'extrémité extérieure 18 de la section S de l'âme 12 dans un plan transversal T vient au contact de l'autre des surfaces (S1,S2) et définit le contour extérieur Cext du joint.

Ainsi, ladite âme 12 étant de contour C fermé, le joint 10 comprend autour de l'ouverture 14 au moins une barrière intérieure 20 d'étanchéité et au moins une barrière extérieure 22 d'étanchéité.

Lesdites barrières intérieure 20 et extérieure 22 d'étanchéité offrent au moins un contact linéaire continu avec l'une des surfaces (S1,S2).

En modifiant de manière globale l'épaisseur e, la hauteur h et/ou l'inclinaison a de l'âme 12 du joint, il est possible d'ajuster ses propriétés mécaniques globales, dont la capacité de reprise élastique et la résistance à la compression de l'âme 12 dudit joint.

De préférence, ledit joint 10 est réalisé dans un matériau rigide et élastique, notamment un matériau métallique tel qu'un acier inoxydable ou un acier à ressort.

L'utilisation d'une âme 12 sensiblement rigide et inclinée permet au joint 10 d'offrir une bonne reprise élastique après plusieurs cycles de déformations et un ajustement relativement aisé de sa résistance globale à la compression.

En effet, contrairement à la concentration de contraintes constatée dans une nervure locale d'un joint plan, la conception inclinée de l'âme 12 du joint selon l'invention permet d'utiliser l'ensemble de la matière du joint 10 pour la fonction de reprise élastique.

En fonction des différentes conceptions possibles des surfaces à étancher (S1,S2), ledit contour C suivi par l'âme 12 est composé d'arcs de différents rayons de courbure et/ou de segments de droites.

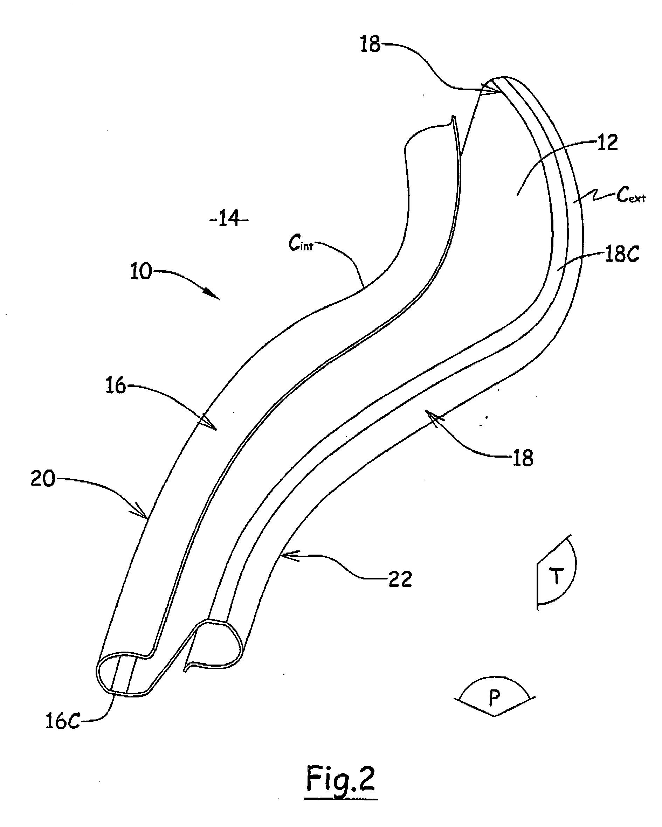

Par conséquent, comme illustré sur les figures 1 et 2, l'âme 12 comprend dans un plan P contenant le contour C entre les surfaces S1 et S2 des portions de différents rayons de courbure et/ou droites.

Ces portions droites ou de différents rayons de courbure ont une capacité de reprise élastique sensiblement homogène, cependant, elles n'offrent pas toutes la même résistance à la compression,

Pour une âme 12 de hauteur h, d'épaisseur e et d'angle d'inclinaison a constantes sur tout le contour C, plus le rayon de courbure R d'une portion de l'âme 12 est grand, moins la matière de l'âme 12 du joint résiste à la déformation, plus ladite portion risque de perdre en capacité de reprise élastique, et surtout, plus la pression de contact sur les surfaces à étancher S1 et S2 diminue.

Donc, pour une hauteur h constante sur tout le contour C de l'âme 12 et afin de préserver les propriétés de reprise élastique de certaines portions de l'âme 12 et d'offrir une résistance à la compression sensiblement homogène sur tout le contour C du joint 10, l'invention prévoit que l'angle a d'inclinaison diminue dans les portions de plus petit rayon de courbure R de l'âme 12 et augmente dans les portions de plus grand rayon de courbure R et/ou droite de l'âme 12, ceci afin d'homogénéiser la pression de contact sur les surfaces à étancher (51,52).

Dans un mode de réalisation préféré, l'extrémité intérieure 16, respectivement l'extrémité extérieure 18, de ladite âme 12 rigide offre une portion de contact 16C, respectivement 18C, sensiblement aplatie et continue avec l'une des surfaces (S1,S2) respectivement l'autre des surfaces (S1,S2), au niveau de la barrière intérieure 20, respectivement extérieure 22, soit un contact sensiblement plan sur tout le contour intérieur Cint et sur tout le contour extérieur Cext du joint, notamment après montage et compression du joint 10 entre lesdites surfaces 51 et 52.

Le joint 10 selon l'invention présente des parois latérales intérieure 24-1 et extérieure 24-2 inclinées sur tout le contour C du joint, toute section S transversale dudit joint 10 s'étendant obliquement par rapport à un axe longitudinal A sensiblement perpendiculaire aux surfaces 51 et S2.

Lors de son utilisation, le joint 10 est comprimé longitudinalement entre les deux surfaces à étancher (51,52) et la matière de l'âme 12 dudit joint 10 assure l'étanchéité en résistant à cette déformation.

Toutefois, étant donné que les extrémités (16,18) de l'âme 12 du joint offrent des portions de contact (16C,18C) sensiblement aplaties, lesdites extrémités (16,18) peuvent glisser par rapport aux surfaces S1 et S2 lors de la compression du joint.

Cette possibilité de déplacement des extrémités (16,18) par rapport aux surfaces S1 et S2 évite que la matière de l'âme 12 ne soit trop sollicitée, comme c'est le cas lors de la compression d'une nervure réalisée dans une plaque d'un joint plan.

En limitant les déformations de l'âme du joint au-delà des limites de résistance de son matériau et en évitant de détériorer son élasticité initiale, le déplacement des extrémités (16,18) par rapport aux surfaces S1 et S2 garantit une étanchéité durable.

Pour améliorer davantage l'efficacité des barrières d'étanchéité extérieure et intérieure (22,20), au moins l'extrémité intérieure 16 et l'extrémité extérieure 18 de ladite âme 12 rigide peuvent être revêtue d'un matériau élastomère ou synthétique.

Eventuellement aussi, toute l'âme 12 peut être recouverte d'un matériau élastomère ou synthétique.

Dans un premier mode de réalisation de l'invention, l'extrémité intérieure 16 et/ou l'extrémité extérieure 18 de l'âme 12 du joint prennent respectivement la forme d'un pli intérieur 26 et/ou d'un pli extérieur 28 de l'âme 12.

De préférence, les deux extrémités de l'âme sont pliées et le pli intérieur 26 et le pli extérieur 28 sont tous deux de même longueur I.

Dans un deuxième mode de réalisation de l'invention, illustré en figure 4, l'extrémité intérieure 16 et/ou l'extrémité extérieure 18 de l'âme 12 du joint prennent respectivement la forme d'un rebord intérieur 30 et/ou d'un rebord extérieur 32 de l'âme 12.

Le rebord intérieur 30 et le rebord extérieur 32 de l'âme 12 s'étendent latéralement et dans une direction opposée à la surface (S1,S2) en contact avec l'extrémité (16,18) de l'âme 12 depuis laquelle est issue ledit rebord (30,32).

De préférence, les rebords intérieur 30 et extérieur 32 se prolongent vers l'âme 12 du joint en se repliant sensiblement sur eux-mêmes, comprennent une extrémité 34 venant en contact avec la surface (S1,S2) opposée à l'extrémité (16,18) de l'âme 12 depuis laquelle sont issus lesdits rebords (30,32), et présentent une section transversale sensiblement arrondie afin de favoriser le glissement de ladite extrémité 34 sur lesdites surfaces (S1,S2).

Avantageusement, les rebords intérieur 30 et extérieur 32 sont venus de fabrication avec l'âme 12 du joint, c'est-à-dire réalisée dans une même épaisseur de matériau.

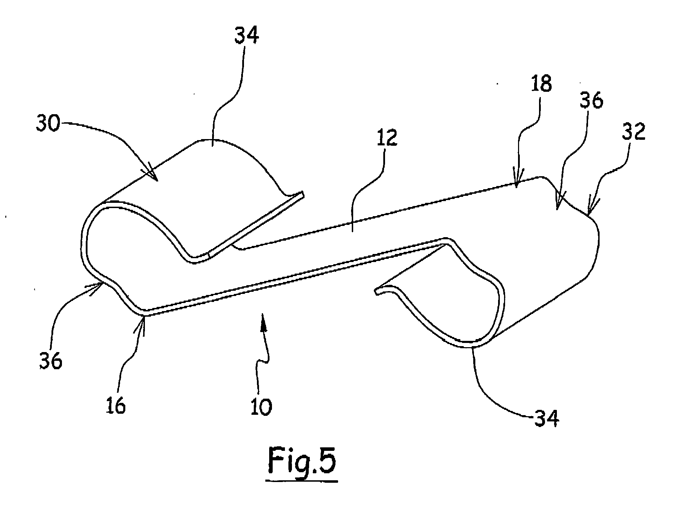

Dans un troisième mode de réalisation de l'invention, illustré en figure 5, un rebord (30,32) peut comprendre au moins un décrochement 36 le raccordant à l'âme 12 du joint, ledit décrochement 36 permettant de conserver la pression de contact transmise par les extrémités intérieure et extérieure (16,18) de l'âme 12 au niveau des barrières d'étanchéité extérieure et intérieure (22,20) contre les surfaces (S1,S2).

De préférence, afin d'éviter que l'extrémité 34 d'un rebord (30,32) ne vienne se mettre en butée contre l'âme 12 du joint, ladite extrémité 34 d'un rebord (30,32) est repliée de manière à s'écarter de l'âme 12 du joint,

On constate que les rebords (30,32) jouent un premier rôle d'amplificateur de compression lors du serrage du joint entre les surfaces (S1,S2) à étancher, et qu'en fin de course d'écrasement, ils jouent un deuxième rôle de butée en limitant l'écrasement total d'une portion de l'âme 12 du joint.

Par conséquent, les rebords (30,32) permettent d'augmenter mais aussi de préserver la raideur et les capacités de reprise élastique du joint au fil des déformations subies.

Etant donné les différents matériaux pouvant être utilisés pour la réalisation du joint et le nombre de différentes configurations possibles pour une même application et pour un même résultat d'homogénéisation de la pression de contact, le dimensionnement exact d'un joint selon l'invention est laissé à l'homme du métier qui dispose des outils nécessaires pour modéliser et simuler les conditions de chaque application.

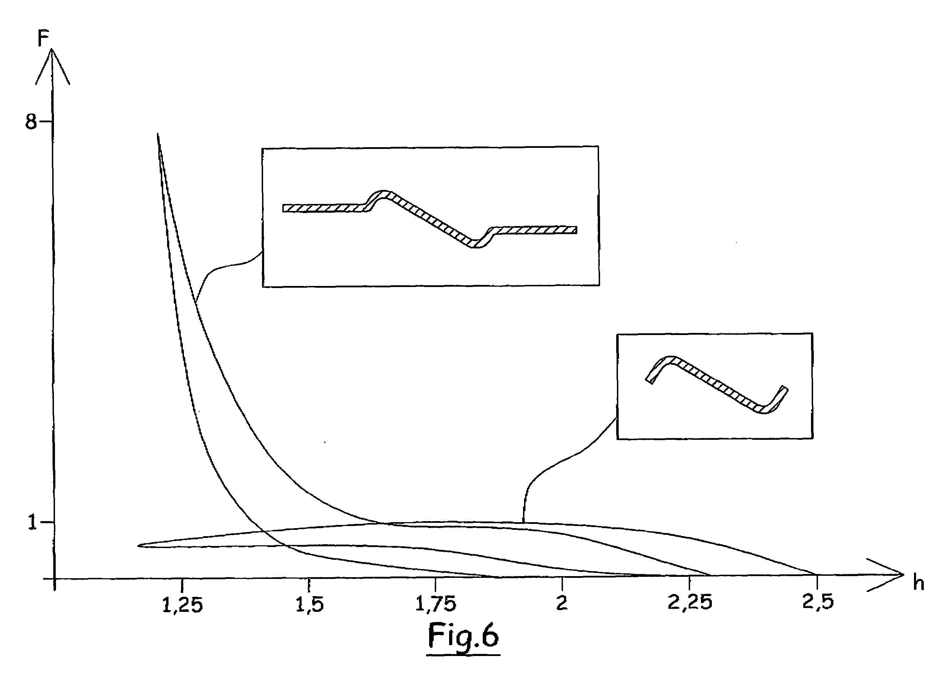

La figure 6 illustre la comparaison d'écrasement sous charge F entre le profil d'une âme 12 d'un joint selon l'invention, ladite âme étant d'épaisseur e, de hauteur h, inclinée d'un angle a et présentant un pli intérieur 26 et un pli extérieur 28, et le profil d'une âme de même épaisseur e, de même hauteur h, de même angle d'inclinaison a, mais intégrée dans une plaque, ladite âme présentant les mêmes plis intérieur 26 et extérieur 28 mais se prolongeant latéralement.

On constate que pour une même valeur maximale d'écrasement de la hauteur h des deux conceptions, l'âme 12 d'un joint 10 selon l'invention présente une meilleure reprise élastique.

De plus, le comportement mécanique à proximité de la valeur maximale d'écrasement des deux conceptions est totalement différent.

Alors que l'âme dont les extrémités se prolongent latéralement en longueur présente une raideur, soit une résistance à la charge F d'écrasement, augmentant de façon exponentielle à proximité de la valeur maximale d'écrasement, la raideur de l'âme selon l'invention demeure sensiblement constante.

De plus, cette différence de comportement s'amplifie d'autant quand le rayon de courbure de l'âme du joint diminue.

Cette comparaison d'écrasement démontre que la conception de l'âme 12 du joint selon l'invention est particulièrement adaptée pour le montage d'un composant de faible rigidité, susceptible de subir des déformations répétées et relativement importantes, sur un bloc moteur.

Bien entendu, l'invention n'est évidemment pas limitée aux modes de réalisation et à l'application représentés et décrits ci-dessus, mais elle en couvre au contraire toutes les variantes, notamment en ce qui concerne la réalisation d'une étanchéité entre une pièce faiblement rigide et une pièce plus rigide, ainsi que les dimensions, les formes et les différents matériaux de réalisation de l'âme 12 du joint 10.

## Revendications

1. Joint (10) de bloc moteur, notamment pour le montage d'un composant faiblement rigide sur ledit bloc moteur, susceptible d'être incorporé entre une première surface 51 et une deuxième surface S2 à étancher, ledit joint comprenant une âme (12) de hauteur h, d'épaisseur e, inclinée d'un angle a par rapport à son plan médian M, avec au moins une première zone de contact avec la première surface S1 et au moins une deuxième zone de contact avec la deuxième surface 52, **caractérisé en ce que** la hauteur h de l'âme (12) est constante et **en ce que** l'angle a d'inclinaison de l'âme (12) varie.

2. Joint (10) de bloc moteur selon la revendication 1, **caractérisé en ce que** ladite âme (12) suit un contour C composé d'arcs de différents rayons de courbure et/ou de segments de droites et **en ce que** l'angle a d'inclinaison de ladite âme (12) diminue dans les portions de plus petit rayon de courbure R de l'âme (12) et augmente dans les portions de plus grand rayon de courbure R et/ou droite de l'âme (12).

3. Joint (10) de bloc moteur selon l'une des revendications 1 ou 2, **caractérisé en ce que** l'extrémité intérieure (16), respectivement l'extrémité extérieure (18), de ladite âme (12) rigide offre une portion de contact (16C), respectivement (18C), sensiblement aplatie et continue avec l'une des surfaces (51,52), respectivement l'autre des surfaces (S1,S2).

4. Joint (10) de bloc moteur selon l'une des revendications 1 à 3, **caractérisé en ce que** l'extrémité intérieure (16) et/ou l'extrémité extérieure (18) de l'âme (12) du joint prennent la forme d'un pli intérieur (26) et/ou d'un pli extérieur (28) de l'âme (12).

5. Joint (10) de bloc moteur selon la revendication 4, **caractérisé en ce que** les deux extrémités (16,18) de l'âme (12) sont pliées et **en ce que** le pli intérieur (26) et le pli extérieur (28) sont tous deux de même longueur 1.

6. Joint (10) de bloc moteur selon l'une des revendications 1 à 5, **caractérisé en ce que** l'extrémité intérieure (16) et/ou l'extrémité extérieure (18) de l'âme 12 du joint prennent respectivement la forme d'un rebord intérieur (30) et/ou d'un rebord extérieur (32) de l'âme (12) s'étendant latéralement et dans une direction opposée à la surface (51,52) en contact avec l'extrémité (16,18) de l'âme (12) depuis laquelle est issue ledit rebord (30,32).

7. Joint (10) de bloc moteur selon la revendication 6, **caractérisé en ce que** les rebords intérieur (30) et extérieur (32) se prolongent vers l'âme (12) du joint en se repliant sur eux-mêmes, comprennent une extrémité (34) venant en contact avec la surface (S1,S2) opposée à l'extrémité (16,18) de l'âme (12) depuis laquelle sont issus lesdits rebords (30,32), et présentent une section transversale arrondie.

8. Joint (10) de bloc moteur selon la revendication 6 ou 7, **caractérisé en ce que** les rebords intérieur (30) et extérieur (32) sont venus de fabrication avec l'âme (12) du joint.

9. Joint (10) de bloc moteur selon l'une des revendications 6 à 8, **caractérisé en ce qu'**un rebord (30,32) comprend au moins un décrochement (36) le raccordant à l'âme (12) du joint.

10. Joint (10) de bloc moteur selon l'une des revendications 6 à 9, **caractérisé en ce que** l'extrémité (34) d'un rebord (30,32) est repliée de manière à s'écarter de l'âme (12) du joint.

11. Joint (10) de bloc moteur selon l'une des revendications précédentes, **caractérisé en ce que** l'épaisseur e de l'âme (12) est constante.
